(19) Europäisches Patentamt
European Patent Office
Office européen des brevets

(11) **EP 2 461 467 B1**

(12) **FASCICULE DE BREVET EUROPEEN**

(45) Date de publication et mention
de la délivrance du brevet:
**13.11.2013 Bulletin 2013/46**

(21) Numéro de dépôt: **11185159.8**

(22) Date de dépôt: **14.10.2011**

(51) Int Cl.:
**H02M 1/12** (2006.01)  **H02M 7/217** (2006.01)

(54) **Convertisseur de puissance à source de courant commandée**

Spannungswandler mit kontrollierter Stromquelle

Power converter with controlled current source

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2010 FR 1059116**

(43) Date de publication de la demande:
**06.06.2012 Bulletin 2012/23**

(73) Titulaire: **Schneider Toshiba Inverter Europe SAS
27120 Pacy sur Eure (FR)**

(72) Inventeurs:
• **Videt, Arnaud
59655 Villeneuve d'Ascq (FR)**
• **Devos, Thomas
78955 Carrières sous Poissy (FR)**
• **Vang, Heu
78955 Carrières sous Poissy (FR)**

(74) Mandataire: **Bié, Nicolas et al
Schneider Electric Industries SAS
Service Propriété Industrielle
35 rue Joseph Monier - CS 30323
92506 Rueil-Malmaison Cedex (FR)**

(56) Documents cités:
**WO-A1-2009/147186**

• **ERTL H ET AL: "A Constant Output Current Three-Phase Diode Bridge Rectifier Employing a Novel Electronic Smoothing Inductor", IEEE TRANSACTIONS ON INDUSTRIAL ELECTRONICS, IEEE SERVICE CENTER, PISCATAWAY, NJ, USA, vol. 52, no. 2, 1 avril 2005 (2005-04-01), pages 454-461, XP011129546, ISSN: 0278-0046, DOI: DOI:10.1109/TIE.2005.843910**
• **SALMON J ET AL: "IMPROVING THE OPERATION OF 3-PHASE DIODE RECTIFIERS USING AN ASYMMETRICAL HALF-BRIDGE DC-LINK ACTIVE FILTER", CONFERENCE RECORD OF THE 2000 IEEE INDUSTRY APPLICATIONS CONFERENCE. 35TH IAS ANNUAL MEETING AND WORLD CONFERENCE ON INDUSTRIAL APPLICATIONS OF ELECTRICAL ENERGY. ROME, ITALY, OCT. 8 - 12, 2000; [CONFERENCE RECORD OF THE IEEE INDUSTRY APPLICATIONS CO, vol. CONF. 35, 8 octobre 2000 (2000-10-08) , pages 2115-2122, XP001042610, DOI: DOI:10.1109/IAS.2000.883118 ISBN: 978-0-7803-6402-8**
• **JANG Y ET AL: "A novel, robust, harmonic injection method for single-switch, three-phase, discontinuous-conduction-mode boost rectifiers", POWER ELECTRONICS SPECIALISTS CONFERENCE, 1997. PESC '97 RECORD., 28TH ANNUAL IEEE ST. LOUIS, MO, USA 22-27 JUNE 1997, NEW YORK, NY, USA, IEEE, US, vol. 1, 22 juin 1997 (1997-06-22), pages 469-475, XP010241587, DOI: DOI:10.1109/PESC. 1997.616765 ISBN: 978-0-7803-3840-1**
• **Pejovic.P: "Three Phase Diode Rectifiers" In: "Three Phase Diode Rectifiers with Low Harmonics", 1 January 2007 (2007-01-01), Springer, XP055050696, ISBN: 978-0-38-729310-3 pages 7-21,**

**Description**

La présente invention se rapporte à un variateur de vitesse doté d'une source de courant commandée.

De manière connue, un convertisseur de puissance comporte plusieurs phases d'entrée connectées au réseau, par exemple trois phases d'entrée s'il est connecté sur un réseau triphasé. Connecté à ses phases d'entrée, un convertisseur de puissance comporte un étage redresseur permettant de transformer la tension alternative fournie par le réseau en une tension continue. Le convertisseur comporte également un bus d'alimentation de puissance doté d'une première ligne d'alimentation à potentiel positif et d'une seconde ligne d'alimentation à potentiel négatif sur lesquelles est appliquée la tension continue et un condensateur de bus connecté entre la première ligne d'alimentation et la seconde ligne d'alimentation et destiné à maintenir constante la tension continue sur le bus.

Lorsque l'étage redresseur est connecté entre un réseau à courant alternatif et une charge capacitive, telle que par exemple le bus continu d'alimentation d'un variateur de vitesse, le courant d'entrée prélevé sur le réseau est formé de pics correspondant à la recharge du condensateur de bus dès que la tension entre phases d'entrée (AC) devient supérieure à la tension du bus d'alimentation ($V_{bus}$). Que l'étage redresseur soit monophasé ou triphasé, le courant d'entrée prélevé sur le réseau est donc loin d'être sinusoïdal car, en plus de son fondamental, il contient de nombreux harmoniques. Le courant d'entrée $I_e$ prélevé sur le réseau est donc défini par un courant fondamental auquel sont ajoutés des harmoniques dont l'amplitude peut s'exprimer en pourcentage par rapport au courant fondamental.

Les harmoniques du courant d'entrée $I_e$ sont caractérisés par deux indicateurs connus dénommés THDi ("Total Harmonic Distortion of Current") et PWHD ("Partial Weighted Harmonic Distortion"). Le THDi correspond au taux de distorsion harmonique en courant qui représente la valeur efficace des harmoniques rapportée à la valeur efficace du courant fondamental. Le PWHD introduit pour sa part une pondération donnant davantage de poids aux harmoniques à haute fréquence, plus particulièrement ceux des rangs 14 à 40.

Un convertisseur de puissance connecté à un réseau triphasé doit satisfaire à la norme IEC61000-3-12 imposant une valeur limite pour l'indicateur THDi, une valeur limite pour l'indicateur PWHD ainsi que des valeurs limites pour les harmoniques de rang 5, rang 7, rang 11 et rang 13 du courant d'entrée.

Selon cette norme, pour un RSCE supérieur à 350 :

-  le THDi doit être inférieur à 48% du courant fondamental,

-  le PWHD doit être inférieur à 46% du courant fondamental,

-  l'harmonique de rang 5 doit être limité à 40% du courant fondamental,

-  l'harmonique de rang 7 doit être limité à 25% du courant fondamental,

-  l'harmonique de rang 11 doit être limité à 15% du courant fondamental,

-  l'harmonique de rang 13 doit être limité à 10% du courant fondamental.

De manière connue, le RSCE caractérise la puissance apparente nominale du convertisseur par rapport à la puissance de court-circuit du réseau sur lequel le convertisseur est connecté.

Une solution connue pour réduire le THDi est d'effectuer un filtrage sur le bus continu par l'ajout d'une inductance DC, qui, si sa valeur est suffisamment grande, assure une conduction continue, c'est-à-dire que le courant redresseur $I_{red}$ circulant sur le bus, en sortie du redresseur, ne retombe jamais à zéro. Plus la valeur de l'inductance employée est grande, moins le courant redresseur $I_{red}$ est ondulé. Si la valeur de l'inductance DC tend vers l'infini, le courant redresseur devient constant et la tension du bus continu n'ondule plus car elle est stabilisée à la valeur moyenne de la tension redresseur $V_{red}$. Pour obtenir un courant redresseur $I_{red}$ le plus constant possible, la valeur de l'inductance devra donc être très élevée, ce qui engendrera des problèmes de coût et d'encombrement.

Les documents " A constant output Current three Phase Diode Bridge rectifier employing a novel Electronic Smoothing Inductor" (IEEE, Ertl et. al) et "Improving the operation of 3 phase diode rectifiers using an asymmetrical half-bridge DC-link Active filter" (IEEE, Salmon et. al) divulguent une source de courant commandée diminuant le THDI et le PHWD d'un convertisseur.

Le but de l'invention est de proposer un convertisseur de puissance dans lequel le courant d'entrée est au moins conforme à la norme IEC61000-3-12 dont les critères sont définis ci-dessus, et dont le profil peut se rapprocher le plus de celui obtenu avec une inductance de valeur infinie.

Ce but est atteint par un convertisseur de puissance comportant :

-  un étage redresseur connecté à plusieurs phases d'un réseau délivrant un courant d'entrée à une fréquence fondamentale déterminée et sur lequel est appliquée une tension redresseur,

- un bus continu d'alimentation connecté à l'étage redresseur et comportant une première ligne d'alimentation et une deuxième ligne d'alimentation sur chacune desquelles est appliqué un potentiel électrique en vue d'obtenir une tension sur le bus continu d'alimentation,

- un condensateur de bus connecté à la première ligne d'alimentation et à la deuxième ligne d'alimentation,

caractérisé en ce qu'il comporte :

- une source de courant commandée située sur la première ligne d'alimentation ou la deuxième ligne d'alimentation, en amont du condensateur de bus, ladite source de courant commandée comportant une inductance et une source de tension variable,

- des moyens de commande de la source de courant commandée configurés pour appliquer une tension déterminée aux bornes de la source de tension variable en vue de contrôler un courant, dit courant redresseur, circulant sur le bus continu d'alimentation, ladite tension étant déterminée à partir de la tension redresseur, de la tension sur le bus continu d'alimentation et d'harmoniques de courant comportant un premier harmonique et un deuxième harmonique synchronisés respectivement à six fois et douze fois la fréquence fondamentale du courant d'entrée délivré par le réseau, l'amplitude et la phase de ces harmoniques étant déterminées pour limiter le THDi et le PWHD.

Selon une particularité, les moyens de commande sont configurés pour mettre en oeuvre une boucle de régulation agencée pour faire suivre au courant redresseur une valeur de référence égale à une valeur moyenne de référence sur laquelle sont injectées lesdits harmoniques.

Selon une autre particularité, les moyens de commande sont configurés pour mettre en oeuvre une boucle de régulation agencée pour faire suivre à la tension sur le bus continu d'alimentation une valeur de référence contenant lesdits harmoniques.

Selon une autre particularité, la boucle de régulation est destinée à déterminer une valeur de référence pour la tension aux bornes de la source de tension variable.

Selon une autre particularité, le premier harmonique présente une amplitude comprise entre 10% et 30% du courant redresseur.

Selon une autre particularité, le deuxième harmonique présente une amplitude comprise entre 0 et 15% du courant redresseur.

Selon une autre particularité, le premier harmonique et le deuxième harmonique sont injectés initialement en opposition de phase.

Selon une autre particularité, la source de tension variable comporte un convertisseur électronique comportant un premier bras de commutation, un deuxième bras de commutation et un condensateur connectés en parallèle, chaque bras de commutation comportant au moins un interrupteur électronique.

L'invention concerne également un variateur de vitesse comportant un étage onduleur muni de bras de commutation destinés à convertir une tension continue en une tension variable destinée à alimenter une charge électrique, ce variateur comportant un convertisseur de puissance tel que défini ci-dessus et connecté en amont de son étage onduleur.

D'autres caractéristiques et avantages vont apparaître dans la description détaillée qui suit en se référant à un mode de réalisation donné à titre d'exemple et représenté par les dessins annexés sur lesquels :

- la figure 1 représente le convertisseur de puissance de l'invention,

- la figure 2 représente la boucle de régulation mise en oeuvre par des moyens de commande du convertisseur de puissance,

- les figures 3 à 7 montrent des résultats obtenus pour le courant d'entrée selon différents exemples décrits.

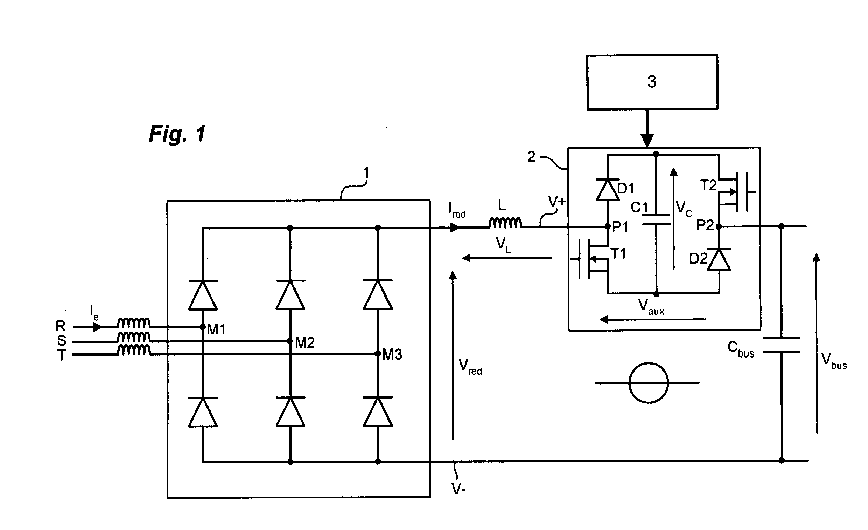

En référence à la figure 1, de manière connue, un convertisseur de puissance comporte un étage redresseur 1 et un bus continu d'alimentation. Différentes configurations de convertisseur de puissance sont possibles. L'étage redresseur 1 employé peut être de nature classique avec un pont de diodes ou être actif en étant doté de bras de commutation commandés.

Dans la suite de la description et comme représenté sur la figure 1, on s'intéressera en particulier à un convertisseur de puissance doté d'un étage redresseur passif à pont de diodes.

En référence à la figure 1, l'étage redresseur 1 est connecté au réseau, par exemple via des inductances AC sur trois phases d'entrée R, S, T. Sur cette figure, l'étage redresseur 1 est passif et composé d'un pont de diodes qui permet de redresser la tension alternative fournie par le réseau et d'appliquer une tension continue sur le bus continu d'alimentation. Plus précisément, l'étage redresseur 1 comporte plusieurs bras composés chacun de deux diodes en série, chaque bras étant connecté à une phase d'entrée R, S, T par le point milieu M1, M2, M3 situé entre les deux diodes.

Le bus continu d'alimentation de puissance est connecté en aval de l'étage redresseur 1. Il comporte une ligne d'alimentation à potentiel positif V+ et une ligne d'alimentation à potentiel négatif V-. Au moins un condensateur de bus Cbus est connecté à chacune des deux lignes d'alimentation du bus et permet de maintenir la tension du bus à une valeur constante.

L'objectif de l'invention est de proposer un convertisseur de puissance dans lequel le courant d'entrée le présente un profil lui permettant de répondre à la norme IEC61000-3-12 et donc de satisfaire aux critères définis dans cette norme. L'invention s'applique tout particulièrement à un convertisseur de puissance de type variateur de vitesse comportant en aval du bus d'alimentation un étage onduleur comportant plusieurs bras de commutation commandés afin de hacher la tension continue en vue d'alimenter une charge électrique avec une tension variable.

Pour cela, le convertisseur de puissance emploie une source de courant commandée connectée en série sur la première ou la deuxième ligne d'alimentation du convertisseur, en amont du condensateur de bus et destinée à contrôler le courant en sortie de l'étage redresseur et circulant sur le bus continu d'alimentation, ci-après désigné courant redresseur, en vue d'influer sur les paramètres définis dans la norme précitée.

Cette source de courant commandée prend par exemple la forme d'une inductance électronique commandée comportant :

- une inductance L de faible valeur,

- une source de tension variable commandée prenant la forme d'un convertisseur électronique 2 composé de deux bras de commutation distincts en parallèle et d'un condensateur C1 connecté en parallèle des deux bras de commutation.

Si l'étage redresseur 1 du convertisseur de puissance est non-réversible, comme par exemple un pont de diodes, les bras de commutation du convertisseur électronique peuvent être unidirectionnels en courant. En revanche, si l'étage redresseur est réversible, c'est-à-dire composé de bras de commutation commandés, les bras de commutation du convertisseur électronique doivent être bidirectionnels en courant pour autoriser la régénération d'énergie sur le réseau.

Différentes topologies peuvent être employées pour le convertisseur électronique 2, selon le type d'étage redresseur 1 employé, mais aussi selon la taille de l'inductance L qui lui est connectée.

Pour un étage redresseur 1 non-réversible, les deux bras de commutation du convertisseur électronique 2 comportent par exemple chacun un interrupteur électronique T1, T2 connecté en série avec une diode D1, D2. Chaque bras de commutation comporte un point milieu de connexion P1, P2 situé entre son interrupteur électronique T1, T2 et sa diode D1, D2. Le point milieu de connexion P1 du premier bras de commutation est connecté à l'inductance DC et le point milieu de connexion P2 du deuxième bras de commutation est connecté au condensateur de bus $C_{bus}$. Sur un bras de commutation du convertisseur électronique 2, l'agencement en série de l'interrupteur électronique et de la diode est inversé par rapport à celui de l'autre bras de commutation.

Si le convertisseur de puissance emploie un étage redresseur réversible, chaque bras de commutation du convertisseur électronique 2 comporte par exemple deux interrupteurs électroniques (configuration non représentée).

Les interrupteurs électroniques T1, T2 employés dans le convertisseur électronique 2 sont par exemple des transistors de type MOSFET commandés par des moyens de commande 3 adaptés, employant par exemple une commande MLI (Modulation de largeur d'impulsion). D'autres composants aptes à remplir la même fonction peuvent bien entendu être employés.

Le convertisseur électronique 2 se comporte ainsi comme une source de tension variable commandée permettant d'obtenir la tension $V_{aux}$. On obtient ainsi la relation suivante entre la tension du bus $V_{bus}$, la tension $V_L$ aux bornes de l'inductance L, la tension $V_{aux}$ aux bornes du convertisseur électronique 2 commandé et la tension $V_{red}$ du redresseur 1 :

$$V_L = V_{red} - V_{bus} - V_{aux}$$

En contrôlant la tension $V_{aux}$ aux bornes du convertisseur électronique 2, il est ainsi possible de faire varier $V_L$

et ainsi de contrôler le courant redresseur $I_{red}$ et de lui imposer un profil particulier. En contrôlant le courant redresseur $I_{red}$, il est ainsi possible de contrôler le THDi, le PWHD et de limiter l'influence des harmoniques de rangs 5, 7, 11 et 13 sur le courant d'entrée $I_e$ comme requis par la norme désignée ci-dessus.

La tension $V_{aux}$ aux bornes du convertisseur électronique 2 peut être contrôlée de différentes manières grâce aux moyens de commande 3 des interrupteurs électroniques T1 et T2 du convertisseur électronique, par exemple en effectuant une boucle de régulation. Différentes boucles de régulations sont possibles :

- Une première boucle de régulation consiste par exemple à déterminer une trajectoire de référence $I_{red}^{ref}$ permettant de remplir les objectifs pour le courant redresseur $I_{red}$ puis de réguler cette trajectoire.

- Une autre boucle de régulation possible consiste par exemple à réguler la tension $V_{bus}$ autour d'une trajectoire $V_{bus}^{ref}$ contenant les harmoniques nécessaires afin que le courant d'entrée remplisse les objectifs définis dans la norme. Cette solution permettra notamment d'éviter l'emploi d'un capteur de courant pour mesurer le courant redresseur $I_{red}$.

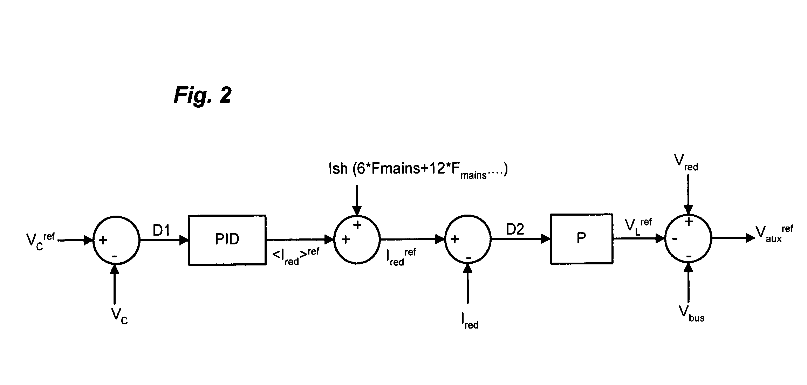

Un exemple d'une boucle de régulation en courant mise en oeuvre par les moyens de commande est visible en figure 2 et suit le processus décrit ci-dessous. D'autres exemples de boucles de régulation permettant d'obtenir les mêmes résultats peuvent bien entendu être imaginés. Cette boucle de régulation se divise en une boucle de régulation de tension permettant de déterminer une valeur de référence $I_{red}^{ref}$ pour le courant redresseur et une boucle de régulation de courant destinée à déterminer une valeur de référence $V_{aux}^{ref}$ pour la tension aux bornes du convertisseur électronique 2 à partir de la valeur de référence $I_{red}^{ref}$ pour le courant redresseur. La boucle de régulation globale suit le processus suivant :

- application en entrée d'une valeur de référence $V_c^{ref}$ pour la tension aux bornes du condensateur C1 du convertisseur électronique 2,

- mesure de la valeur de la tension $V_c$ aux bornes du condensateur C1 du convertisseur électronique 2,

- comparaison entre la valeur de référence $V_c^{ref}$ appliquée en entrée et la valeur mesurée $V_c$ pour la tension aux bornes du condensateur C1 du convertisseur électronique 2 afin de déterminer une différence D1,

- introduction de ladite différence D1 dans un régulateur tel que par exemple un régulateur Proportionnel-Intégral-Dérivé (PID) afin de déterminer une valeur de référence $<I_{red}>^{ref}$ d'un courant redresseur moyen,

- injection d'harmoniques $I_{sh}$ sur la valeur de référence $<I_{red}>^{ref}$ du courant redresseur moyen, lesdits harmoniques $I_{sh}$ étant synchronisés à 6*k fois la fréquence fondamentale $F_{mains}$ du courant d'entrée $I_e$ délivré par le réseau en entrée du convertisseur, k étant un entier supérieur ou égal à 1 incrémenté d'une unité pour chaque harmonique supplémentaire, afin de générer une valeur de référence $I_{red}^{ref}$ pour le courant redresseur,

- comparaison entre la valeur de référence $I_{red}^{ref}$ obtenue pour le courant redresseur et le courant redresseur $I_{red}$ mesuré et détermination d'une différence D2,

- introduction de ladite différence D2 dans un régulateur, tel que par exemple un régulateur Proportionnel (P) afin de déterminer une valeur de référence $V_L^{ref}$ pour la tension aux bornes de l'inductance L de la source de courant commandée,

- détermination d'une valeur de référence $V_{aux}^{ref}$ pour la tension aux bornes du convertisseur électronique 2 à partir de la valeur de référence $V_L^{ref}$ de la tension aux bornes de l'inductance L, d'une mesure de la tension redresseur $V_{red}$, et d'une mesure de la tension du bus continu d'alimentation $V_{bus}$.

Selon l'invention, les harmoniques $I_{sh}$ injectés pour déterminer la valeur de référence $V_{red}^{ref}$ du courant redresseur doivent être générés à une fréquence, amplitude et phase déterminées en vue de limiter à la fois le THDi, le PWHD et les harmoniques de rang 5, de rang 7, de rang 11 et de rang 13 du courant d'entrée $I_e$.

Pour cela, les harmoniques sont injectés sur la valeur de référence du courant redresseur moyen à une fréquence de 6*k fois la fréquence du courant d'entrée, k étant un entier supérieur ou égal à 1, incrémenté d'une unité pour chaque harmonique supplémentaire injecté. Si la fréquence du réseau est de 50 Hz, des harmoniques peuvent donc être injectés à 300Hz pour un harmonique dit de rang 1, 600Hz pour un harmonique dit de rang 2, 900Hz pour un harmonique dit de rang 3, 1200Hz pour un harmonique dit de rang 4, 1500Hz pour un harmonique dit de rang 5 et avec une amplitude et une phase déterminées en vue de limiter à la fois le THDi, le PWHD et les harmoniques de rang 5, de rang 7, de rang 11 et de rang 13 du courant d'entrée $I_e$. Cependant, il ne s'agit pas simplement d'injecter plusieurs harmoniques à 6*k fois la fréquence du réseau car les résultats obtenus ne sont pas toujours satisfaisants.

Selon l'invention, il s'avère que l'injection de seulement deux harmoniques synchronisés respectivement à six fois (k=1) la fréquence du réseau et à douze fois (k=2) la fréquence $F_{mains}$ du réseau, à des amplitudes déterminées comprises entre 10% et 30% du courant moyen redresseur <Ired> pour l'harmonique HM1 de rang 1 et comprise entre 0 et 15% du courant moyen redresseur <Ired> pour l'harmonique HM2 de rang 2, permet de remplir de manière optimale les objectifs de la norme. Pour l'harmonique HM1 de rang 1, plus l'amplitude est faible, moins il y aura de contraintes sur le condensateur de bus $C_{bus}$. Si l'amplitude de l'harmonique HM1 de rang 1 est faible, il sera d'autant mieux d'augmenter l'amplitude de l'harmonique HM2 de rang 2, tout en restant dans les limites définies ci-dessus.

Avantageusement, lors de l'injection de deux harmoniques HM1, HM2, celles-ci doivent initialement (à t=0) être sensiblement en opposition de phase (déphasées de 180°). Dans les tableaux représentés ci-dessous, les phases des harmoniques sont exprimées à 90° par rapport au fondamental du courant.

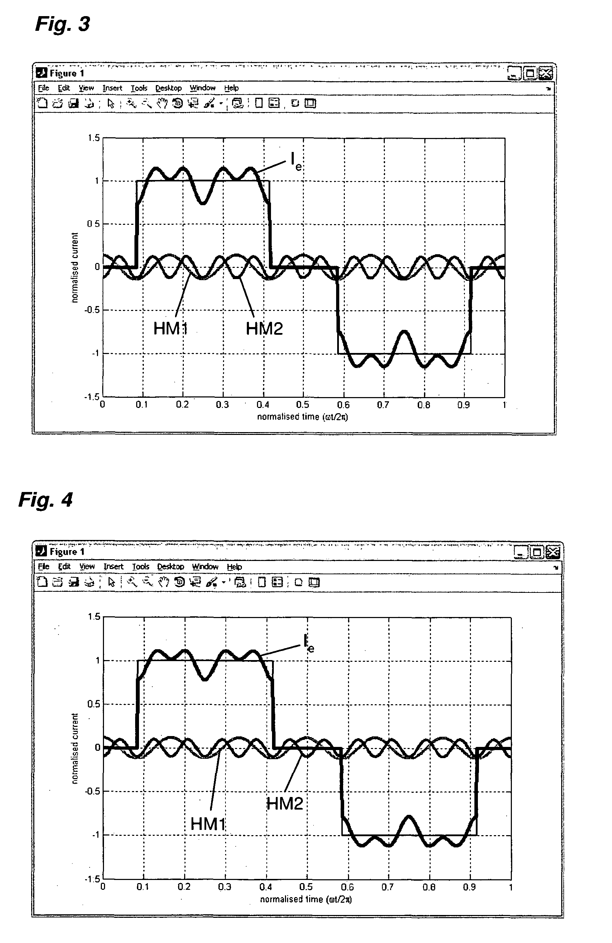

Voici ci-dessous deux exemples d'injection de deux harmoniques HM1, HM2 à respectivement 300Hz et 600Hz qui permettent de remplir les objectifs fixés par la norme. Pour chacun de ces deux exemples, les résultats obtenus sur le courant d'entrée $I_e$ sont visibles respectivement sur la figure 3 et sur la figure 4.

Exemple 1

|  | Amplitude | Phase (degré) | THDi | PWHD | H5 | H7 | H11 | H13 |
|---|---|---|---|---|---|---|---|---|
| HM1 300Hz | 14% | 0 | 32% | 38% | 27% | 7.4% | 13.4% | 0.5% |
| HM2 600Hz | 12.5% | 180 | | | | | | |

Exemple 2

|  | Amplitude | Phase (degré) | THDi | PWHD | H5 | H7 | H11 | H13 |
|---|---|---|---|---|---|---|---|---|
| HM1 300Hz | 11.9% | 0 | 31.1% | 41.4% | 25.9% | 8.5% | 12.3% | 1.3% |
| HM2 600Hz | 9.8% | 180 | | | | | | |

Ces deux premiers exemples montrent la pertinence de l'injection de seulement deux harmoniques à 300Hz et 600Hz avec les caractéristiques précitées. On remarque que le THDi et le PWHD sont inférieurs aux limites prescrites par la norme, tout en gardant une marge suffisante.

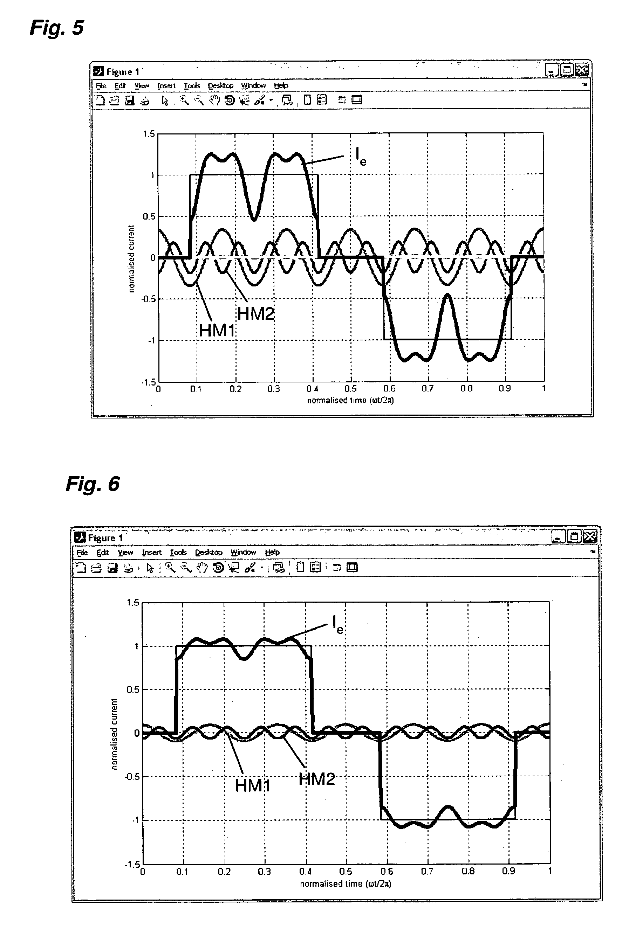

Par ailleurs, les objectifs peuvent être remplis avec l'injection de cinq harmoniques mais cela peut s'avérer trop contraignant, notamment au niveau de la dynamique du contrôle. L'exemple 3 ci-dessous permet d'illustrer ce phénomène (figure 5).

Exemple 3

|  | Amplitude | Phase (degré) | THDi | PWHD | H5 | H7 | H11 | H13 |
|---|---|---|---|---|---|---|---|---|
| HM1 (300Hz) | 33.9% | 0 | 39.1% | 20.1% | 36.0% | 2.9% | 13.5% | 5.3% |
| HM2 (600Hz) | 18.4% | 180 | | | | | | |
| HM3 (900Hz) | 1.7% | 360 | | | | | | |
| HM4 (1200Hz) | 0.6% | 180 | | | | | | |
| HM5 (1500Hz) | 0.0% | 180 | | | | | | |

Dans l'exemple 3 ci-dessus, l'amplitude de l'harmonique de rang 1 est trop élevée (environ 34%) et engendre des contraintes de dimensionnement sur le condensateur de bus.

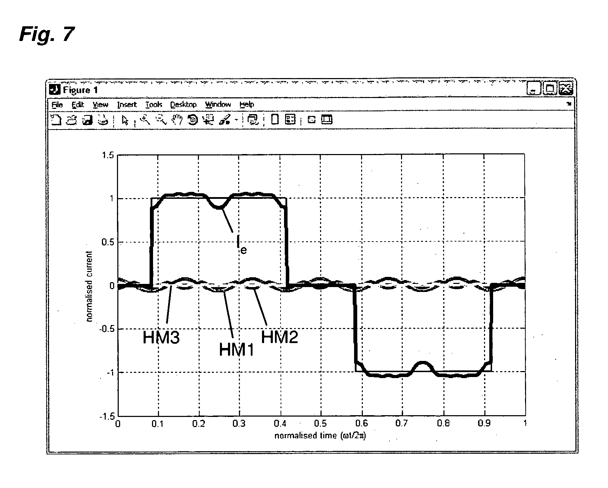

Voici ci-dessous deux autres exemples qui sont en revanche insatisfaisants. Le premier exemple concerne l'injection de deux harmoniques à 300Hz et 600Hz et le deuxième exemple concerne l'injection de cinq harmoniques à 300Hz, 600Hz, 900Hz, 1200Hz, 1500Hz. Pour ces deux autres exemples, les résultats obtenus sur le courant d'entrée $I_e$ sont visibles respectivement sur la figure 6 et sur la figure 7. Sur la figure 7, les harmoniques HM4 et HM5 ne sont pas référencés car difficilement identifiables.

Exemple 4

|            | Amplitude | Phase (degré) | THDi | PWHD | H5 | H7 | H11 | H13 |
|------------|-----------|---------------|------|------|-----|-----|------|------|
| HM1 300Hz  | 9.1%      | 0             | 30.3% | 46.0% | 24.5% | 9.7% | 11.0% | 3.4% |
| HM2 600Hz  | 6.3%      | 180           |      |      |     |     |      |      |

On remarque dans cet exemple 4 que le PWHD obtenu n'est pas bon car juste égal à la limite requise (46%). Par rapport aux exemples 1 et 2, on peut notamment remarquer que l'amplitude de l'harmonique de rang 1 n'est pas supérieure à 10% ce qui est sans doute insuffisant.

Exemple 5

|                | Amplitude | Phase (degré) | THDi | PWHD | H5 | H7 | H11 | H13 |
|----------------|-----------|---------------|------|------|-----|-----|------|------|
| HM1 (300Hz)    | 7.1%      | 0             | 30.0% | 48.9% | 23.7% | 10.5% | 10.2% | 4.9% |
| HM2 (600Hz)    | 3.7%      | 180           |      |      |     |     |      |      |
| HM3 (900Hz)    | 1.1%      | 0             |      |      |     |     |      |      |
| HM4 (1200Hz)   | 0.1%      | 360           |      |      |     |     |      |      |
| HM5 (1500Hz)   | 0.8%      | 180           |      |      |     |     |      |      |

Dans ce dernier exemple, on remarque que, en optimisant au maximum le THDi, l'injection de cinq harmoniques synchronisés à six fois la fréquence du réseau ne permet pas de satisfaire au critère de 46% fixé par la norme pour le PWHD.

Il est bien entendu que l'on peut, sans sortir du cadre de l'invention, imaginer d'autres variantes et perfectionnements de détail.

**Revendications**

**1.** Convertisseur de puissance comportant :

- un étage redresseur (1) connecté à plusieurs phases (R, S, T) d'un réseau délivrant un courant d'entrée ($I_e$) à une fréquence fondamentale ($F_{mains}$) déterminée et sur lequel est appliquée une tension redresseur,
- un bus continu d'alimentation connecté à l'étage redresseur (1) et comportant une première ligne d'alimentation (V+) et une deuxième ligne d'alimentation (V-) sur chacune desquelles est appliqué un potentiel électrique en vue d'obtenir une tension sur le bus continu d'alimentation ($V_{bus}$),
- un condensateur de bus (Cbus) connecté à la première ligne d'alimentation et à la deuxième ligne d'alimentation,

**caractérisé en ce qu'**il comporte :

- une source de courant commandée située sur la première ligne d'alimentation ou la deuxième ligne d'alimentation, en amont du condensateur de bus ($C_{bus}$), ladite source de courant commandée comportant une inductance (L) et une source de tension variable,

- la source de tension variable comportant un convertisseur électronique (2) comportant un premier bras de commutation, un deuxième bras de commutation et un condensateur (C1) connectés en parallèle, chaque bras de commutation comportant au moins un interrupteur électronique (T1, T2),

- des moyens de commande (3) de la source de courant commandée configurés pour appliquer une tension déterminée ($V_{aux}$) aux bornes de la source de tension variable en vue de contrôler un courant, dit courant redresseur ($I_{red}$), circulant sur le bus continu d'alimentation, ladite tension ($V_{aux}$) étant déterminée à partir de la tension redresseur ($V_{red}$), de la tension sur le bus continu d'alimentation ($V_{bus}$) et d'harmoniques de courant comportant un premier harmonique et un deuxième harmonique synchronisés respectivement à six fois et douze fois la fréquence fondamentale ($F_{mains}$) du courant d'entrée ($I_e$) délivré par le réseau, l'amplitude et la phase de ces harmoniques étant déterminées pour limiter le THDi et le PWHD

- les moyens de commande (3) sont configurés pour mettre en oeuvre une boucle de régulation agencée pour faire suivre au courant redresseur (Ired) une valeur de référence ($I_{red}^{ref}$) égale à une valeur moyenne de référence ($<I_{red}>^{ref}$) sur laquelle sont injectés lesdits harmoniques,

- ladite valeur moyenne de référence ($<I_{red}>^{ref}$) étant obtenue en sortie d'un régulateur dans lequel est introduit la différence entre une valeur de tension ($V_c$) aux bornes du condensateur (C1) du convertisseur électronique (2) et une valeur de référence ($V_c^{ref}$) pour la tension aux bornes du condensateur (C1) du convertisseur électronique (2).

2. Convertisseur selon la revendication 1, **caractérisé en ce que** les moyens de commande (3) sont configurés pour mettre en oeuvre une boucle de régulation agencée pour faire suivre à la tension sur le bus continu d'alimentation ($V_{bus}$) une valeur de référence ($V_{bus}^{ref}$) contenant lesdits harmoniques.

3. Convertisseur selon la revendication 2, **caractérisé en ce que** la boucle de régulation est destinée à déterminer une valeur de référence ($V_{aux}^{ref}$) pour la tension aux bornes de la source de tension variable.

4. Convertisseur selon l'une des revendications 1 à 3, **caractérisé en ce que** le premier harmonique présente une amplitude comprise entre 10% et 30% du courant redresseur.

5. Convertisseur selon l'une des revendications 1 à 4, **caractérisé en ce que** le deuxième harmonique présente une amplitude comprise entre 0 et 15% du courant redresseur.

6. Convertisseur selon l'une des revendications 1 à 5, **caractérisé en ce que** le premier harmonique (HM1) et le deuxième harmonique (HM2) sont injectés initialement en opposition de phase.

7. Variateur de vitesse comportant un étage onduleur muni de bras de commutation destinés à convertir une tension continue en une tension variable destinée à alimenter une charge électrique, **caractérisé en ce qu'**il comporte un convertisseur de puissance tel que défini dans l'une des revendications 1 à 6, connecté en amont de son étage onduleur.


**Patentansprüche**

1. Leistungsumsetzer, der Folgendes umfasst:

   - eine Gleichrichterstufe (1), die mit mehreren Phasen (R, S, T) eines Netzes verbunden ist, das einen Eingangsstrom ($I_e$) mit einer bestimmten Grundfrequenz ($F_{mains}$) liefert, und an die eine Gleichrichterspannung angelegt wird,

   - einen Gleichstromversorgungsbus, der mit der Gleichrichterstufe (1) verbunden ist und eine erste Versorgungsleitung (V+) und eine zweite Versorgungsleitung (V-) aufweist, an die jeweils ein elektrisches Potential angelegt wird, um auf dem Gleichstromversorgungsbus eine Spannung ($V_{bus}$) zu erhalten,

   - einen Buskondensator ($C_{bus}$), der mit der ersten Versorgungsleitung und mit der zweiten Versorgungsleitung verbunden ist,

   **dadurch gekennzeichnet, dass** er Folgendes umfasst:

   - eine gesteuerte Stromquelle, die sich in der ersten Versorgungsleitung oder in der zweiten Versorgungsleitung stromaufseitig des Buskondensators ($C_{bus}$) befindet, wobei die gesteuerte Stromquelle eine Induktivität (L) und eine variable Spannungsquelle enthält,

- wobei die variable Spannungsquelle einen elektronischen Umsetzer (2) umfasst, der einen ersten Kommutationszweig, einen zweiten Kommutationszweig und einen Kondensator (C1), die parallel geschaltet sind, umfasst, wobei jeder Kommutationszweig wenigstens einen elektronischen Ein/Aus-Schalter (T1, T2) enthält,

- Steuermittel (3) für die gesteuerte Stromquelle, die konfiguriert sind, eine bestimmte Spannung ($V_{aux}$) an die Anschlüsse der variablen Spannungsquelle anzulegen, um einen Strom, den so genannten Gleichrichterstrom ($I_{red}$), zu steuern, der in dem Gleichstromversorgungsbus fließt, wobei die Spannung ($V_{aux}$) anhand der Gleichrichterspannung ($V_{red}$), der Spannung auf dem Gleichstromversorgungsbus ($V_{bus}$) und Harmonischer des Stroms, die eine erste Harmonische und eine zweite Harmonische umfassen, die gleich dem Sechsfachen bzw. dem Zwölffachen der Grundfrequenz ($F_{mains}$) des von dem Netz gelieferten Eingangsstroms ($I_e$), sind, bestimmt wird, wobei die Amplitude und die Phase dieser Harmonischen bestimmt sind, um THDi und PWHD zu begrenzen,

- wobei die Steuermittel (3) konfiguriert sind, um eine Regulierungsschleife zu verwenden, die dafür ausgelegt ist, auf den Gleichrichterstrom (Ired) einen Referenzstrom ($I_{red}^{ref}$), der gleich einem Referenzmittelwert ($<I_{red}>^{ref}$), in den die Harmonischen injiziert werden, ist, folgen zu lassen,

- wobei der Referenzmittelwert ($<I_{red}>^{ref}$) am Ausgang eines Reguliers erhalten wird, in den die Differenz zwischen einem Spannungswert ($V_C$) an den Anschlüssen des Kondensators (C1) des elektronischen Umsetzers (2) und einem Referenzwert ($V_C^{ref}$) für die Spannung an den Anschlüssen des Kondensators (C1) des elektronischen Umsetzers (2) eingegeben wird.

2. Umsetzer nach Anspruch 1, **dadurch gekennzeichnet, dass** die Steuermittel (3) konfiguriert sind, eine Regulierungsschleife zu verwenden, die dafür ausgelegt ist, der Spannung auf dem Gleichstromversorgungsbus ($V_{bus}$) einen Referenzwert ($V_{bus}^{ref}$), der die Harmonischen enthält, folgen zu lassen.

3. Umsetzer nach Anspruch 2, **dadurch gekennzeichnet, dass** die Regulierungsschleife dazu bestimmt ist, einen Referenzwert ($V_{aux}^{ref}$) für die Spannung an den Anschlüssen der variablen Spannungsquelle zu bestimmen.

4. Umsetzer nach einem der Ansprüche 1 bis 3, **dadurch gekennzeichnet, dass** die erste Harmonische eine Amplitude aufweist, die im Bereich von 10 % bis 30 % des Gleichrichterstroms liegt.

5. Umsetzer nach einem der Ansprüche 1 bis 4, **dadurch gekennzeichnet, dass** die zweite Harmonische eine Amplitude aufweist, die im Bereich von 0 bis 15 % des Gleichrichterstroms liegt.

6. Umsetzer nach einem der Ansprüche 1 bis 5, **dadurch gekennzeichnet, dass** die erste Harmonische (HM1) und die zweite Harmonische (HM2) zunächst mit entgegengesetzter Phase injiziert werden.

7. Stromrichtervorrichtung, die eine Wechselrichterstufe umfasst, die mit einem Kommutationszweig versehen ist, der dazu bestimmt ist, eine Gleichspannung in eine variable Spannung umzusetzen, die dazu bestimmt ist, eine elektrische Last zu versorgen, **dadurch gekennzeichnet, dass** sie einen Leistungsumsetzer wie in einem der Ansprüche 1 bis 6 definiert umfasst, der stromaufseitig ihrer Wechselrichterstufe angeschlossen ist.

**Claims**

1. Power converter comprising:

- a rectifier stage (1) connected to several phases (R, S, T) of a network delivering an input current ($I_e$) at a determined fundamental frequency ($F_{mains}$) and to which a rectifier voltage is applied,
- a DC power supply bus connected to the rectifier stage (1) and comprising a first power supply line (V+) and a second power supply line (V-) to each of which an electric potential is applied with a view to obtaining a voltage on the DC power supply bus ($V_{bus}$),
- a bus capacitor (Cbus) connected to the first power supply line and to the second power supply line,

**characterized in that** it comprises:

- a controlled current source situated on the first power supply line or the second power supply line, upstream of the bus capacitor ($C_{bus}$), the said controlled current source comprising an inductor (L) and a variable voltage source,

- the variable voltage source comprising an electronic converter (2) comprising a first switching arm, a second switching arm and a capacitor (C1) which are connected in parallel, each switching arm comprising at least one electronic switch (T1, T2),

- control means (3) for the controlled current source, which are configured to apply a determined voltage ($V_{aux}$) across the terminals of the variable voltage source with a view to controlling a current, termed the rectifier current ($I_{red}$), flowing on the DC power supply bus, the said voltage ($V_{aux}$) being determined on the basis of the rectifier voltage ($V_{red}$), of the voltage on the DC power supply bus ($V_{bus}$) and of current harmonics comprising a first harmonic and a second harmonic synchronized respectively at six times and twelve times the fundamental frequency ($F_{mains}$) of the input current ($I_e$) delivered by the network, the amplitude and the phase of these harmonics being determined so as to limit the THDi and the PWHD.

- the control means (3) are configured to implement a regulation loop designed to cause the rectifier current (Ired) to follow a reference value ($I_{red}^{ref}$) equal to a mean reference value ($<I_{red}>^{ref}$) onto which the said harmonics are injected,

- said mean reference value ($<I_{red}>^{ref}$) being obtained at the output of a regulator in which is introduced the difference between a value for the voltage ($V_C$) across the terminals of the capacitor (C1) of the electronic converter (2) and a reference value ($V_C^{ref}$) for the voltage across the terminals of the capacitor (C1) of the electronic converter (2).

2.  Converter according to Claim 1, **characterized in that** the control means (3) are configured to implement a regulation loop designed to cause the voltage on the DC power supply bus ($V_{bus}$) to follow a reference value ($V_{bus}^{ref}$) containing the said harmonics.

3.  Converter according to Claim 2, **characterized in that** the regulation loop is intended to determine a reference value ($V_{aux}^{ref}$) for the voltage across the terminals of the variable voltage source.

4.  Converter according to one of Claims 1 to 3, **characterized in that** the first harmonic exhibits an amplitude lying between 10% and 30% of the rectifier current.

5.  Converter according to one of Claims 1 to 4, **characterized in that** the second harmonic exhibits an amplitude lying between 0 and 15% of the rectifier current.

6.  Converter according to one of Claims 1 to 5, **characterized in that** the first harmonic (HM1) and the second harmonic (HM2) are initially injected in phase opposition.

7.  Variable speed drive comprising an inverter stage furnished with switching arms which are intended to convert a DC voltage into a variable voltage intended to power an electrical load, **characterized in that** it comprises a power converter such as defined in one of Claims 1 to 6, connected upstream of its inverter stage.

**Fig. 1**

EP 2 461 467 B1

**Fig. 2**

$V_C{}^{ref}$ → + − D1 → PID → $<I_{red}>^{ref}$

Ish (6*Fmains+12*F$_{mains}$....)

+ + → $I_{red}{}^{ref}$ → + − D2 → P → $V_L{}^{ref}$

$V_C$

$I_{red}$

$V_{red}$

+ − − → $V_{aux}{}^{ref}$

$V_{bus}$

*Fig. 3*

*Fig. 4*

*Fig. 5*

*Fig. 6*

*Fig. 7*

**RÉFÉRENCES CITÉES DANS LA DESCRIPTION**

**Littérature non-brevet citée dans la description**

- **ERTL.** A constant output Current three Phase Diode Bridge rectifier employing a novel Electronic Smoothing Inductor. *IEEE*

- **SALMON.** Improving the operation of 3 phase diode rectifiers using an asymmetrical half-bridge DC-link Active filter. *IEEE*